# EUROPÄISCHE PATENTANMELDUNG

(11) **EP 2 221 173 A1**
(43) Veröffentlichungstag der Anmeldung: **25.08.2010**
(21) Anmeldenummer: 08020616.2
(22) Anmeldetag: 27.11.2008
(51) Int. Cl.: B32B 7/12, B32B 7/06, B32B 27/06, H05B 33/02

(54) **Elektrolumineszierender Folienverbund mit einem Schutzfolienlaminat**

(71) Anmelder: Bayer MaterialScience AG, 51368 Leverkusen (DE)
(72) Erfinder: Die Erfindernennung liegt noch nicht vor

(57) **Zusammenfassung**

Die vorliegende Erfindung betrifft einen elektrolumineszierenden Folienverbund mit mit einem Schutzfolienlaminat, ein Verfahren zu dessen Herstellung, sowie deren Verwendung als Beleuchtung auf einem Kraftfahrzeug.

## Beschreibung

Die vorliegende Erfindung betrifft einen elektrolumineszierenden Folienverbund mit einem Schutzfolienlaminat, ein Verfahren zu dessen Herstellung, sowie deren Verwendung als Beleuchtung auf einem Kraftfahrzeug.

Jeder Teilnehmer eines Automobilrennens, wie zum Beispiel dem 24-Stunden-Rennen von LeMans, muss funktionstüchtige leuchtende Startnummern am entsprechenden Rennenfahrzeug besitzen. Die Beleuchtung wird vorzugsweise durch elektrolumineszierende Folien erreicht, die mit einem einseitig klebenden Klebeband am Rennfahrzeug, beispielsweise an der oder den Tür(en) und/oder der Motorhaube befestigt werden. Das Klebeband wird dazu vorzugsweise vollumfänglich derart um den Rand der elektrolumineszierenden Folie geführt, das ein Teil des Bandes auf der Folie und ein anderer Teil auf der Oberfläche haftet, auf der die Folie befestigt werden soll.

Ebenfalls ist es erforderlich, die Werbungen der jeweiligen Sponsoren und deren Logos auch bei Dunkelheit sichtbar zu machen.

Eine Möglichkeit, Zeichen bei Dunkelheit sichtbar zu machen, besteht darin Reflexionsfolien zu verwenden, die das Licht zurückwerfen, sofern sie angestrahlt werden. Daraus ergibt sich allerdings der offensichtliche Nachteil, dass ohne vorherige Beleuchtung mit einem Strahler keine Reflektion der entsprechenden Zeichen stattfinden kann.

Gegenüber Reflexionsfolien bieten elektrolumineszierende Folien den Vorteil, dass diese selbstleuchtend sind und somit Zeichen inklusive Grafiken und Schriftzügen beleuchtet darstellen können, ohne dass eine vorherige Beleuchtung durch eine externe Lichtquelle notwendig war.

Bei Automobilrennen, die unter extremen Witterungsbedingungen und auf verschmutztem Gelände stattfinden, ergibt sich als eine weitere Anforderung an elektrolumineszierende Folien, dass diese auch gereinigt werden müssen, um Zeichen wieder sichtbar zu machen. Da diese Reinigung aber möglichst schnell und effektiv erfolgen soll, um den Rennverlauf nicht zu verzögern bzw. zu beeinträchtigen, ist es erforderlich, den elektrolumineszierenden Folienverbund so zu gestalten, dass dessen schnelle und effektive Reinigung ermöglicht ist.

Eine Aufgabe der vorliegenden Erfindung bestand daher darin, einen elektrolumineszierenden Folienverbund (EL-Folienverbund) zur Verfügung zu stellen, der sich schnell und effektiv reinigen lässt, das heißt der sich schnell und effektiv von Schmutz befreien lässt.

Die vorstehend genannte Aufgabe wurde durch das Zurverfügungstellen eines EL-Folienverbundes gelöst, der eine Schichtenfolge aufweist, umfassend:
- ein Schutzfolienlaminat (a)
- mit einer Klebstoffschicht (b),
- und ein Elektrolumineszenzelement (EL-Element) (c), umfassend
   > ein zumindest teilweise transparentes Substrat (ca),
   > ein mindestens einer auf dem Substrat aufgebrachten EL-Anordnung (cb), und
   > eine Schutzschicht oder Schutzfolie (cc).

Dabei umfasst das Schutzfolienlaminat (a) wenigstens eine (1) Schicht. Vorzugsweise umfasst das Schutzfolienlaminat (a) wenigstens 2 Schichten, besonders bevorzugt umfasst das Schutzfolienlaminat (a) wenigstens 5 Schichten, ganz besonders bevorzugt umfasst das Schutzfolienlaminat (a) wenigstens 10 Schichten, insbesondere wenigstens 25 Schichten. Bevorzugt ist eine maximale Anzahl von Schichten des Schutzfolienlaminats (a) im Bereich zwischen 40 und 50 Schichten. Je nach Anwendung kann aber auch eine Anzahl von 1, 2, 3, 4, 5, 6, 7, 8, 9, 10, 11 oder 12 Schichten sinnvoll sein. Eine geringe Schichtzahl ist insbesondere dann vorteilhaft, wenn das EL-Element absehbar nur wenige Male, beispielsweise ein-, zwei- oder drei- oder viermal, gereinigt werden muss oder soll.

Das Schutzfolienlaminat (a) bedeckt vorzugsweise des EL-Element (c) vollflächig, wodurch die gesamte Oberfläche des EL-Elements geschützt werden kann, und ragt flächig über dieses an dessen Rändern hinaus. Durch die Klebstoffschicht (b) an der Unterseite des Schutzfolienlaminats (a) wird dieses auf dem EL-Element befestigt. Durch die Teile des Schutzlaminats (a), die über das EL-Element flächig hinausragen, wird der gesamte EL-Folienverbund mittels der Klebstoffschicht (b) auf einem Untergrund befestigt.

Der EL-Folienverbund kann auf einem beliebigen Untergrund aufgebracht werden. Vorzugsweise handelt es sich bei dem Untergrund um eine Oberfläche aus Metall, Kunststoff, Glas, Holz und/oder Beton, die ihrerseits noch beschichtet sein kann, beispielsweise mit einem Lack, einem Farbaufstrich, einer Kunststofffolie, Papier oder Pappe; jedoch sind andere Materialien für den Untergrund ebenfalls möglich. Beispiele für eine solche Oberfläche sind Türen, Fenster, Motorhauben von Kraftfahrzeugen,

Werbesäulen, Plakatwände, Schaufenster, Wandungen von Haltestellen des öffentlichen Nahverkehrs etc.

Der EL-Folienverbund kann im Wesentlichen auf zwei Arten auf einem Untergrund zur Verfügung gestellt werden:
1 Zuerst wird das EL-Element (c) auf den Untergrund aufgebracht, beispielweise gelegt, mit der Hand gehalten und/oder geklebt. Danach wird das Schutzfolienlaminat (a) mit der Klebstoffschicht (b) auf das EL-Element und den Untergrund aufgebracht. Das Schutzfolienlaminat (a) kann vor der Aufbringung auf der Klebstoffseite vorzugsweise herstellerseitig mit einer leicht entfernbaren Schutzlage für die Klebstoffschicht (b) versehen sein, wobei die Schutzlage erst vor der Anbringung des Schutzfolienlaminats (a) entfernt wird.
2 Der EL-Folienverbund wird als Ganzes vorbereitet, vorzugsweise vorproduziert, und als Ganzes auf den Untergrund aufgebracht. Der EL-Folienverbund kann vor der Aufbringung auf der EL-Elementseite vorzugsweise herstellerseitig mit einer leicht entfernbaren Schutzlage für die Klebstoffschicht (b), die über das EL-Element (c) hinausragt, versehen sein, wobei die Schutzlage erst vor der Anbringung des Schutzfolienlaminats (a) entfernt wird. Die Schutzlage kann im Wesentlichen nur die Bereiche bedecken, in denen die Klebstoffschicht (b) über das EL-Element (c) hinausragt oder vorzugsweise im Wesentlichen die gesamte Rückseite des EL-Folienverbunds.

Der Folienverbund als Ganzes kann beispielsweise durch dem Fachmann bekannte Verfahren wie Heiß - oder Kaltlaminieren, Aufsetzen des Schutzfolienlaminats (a) einschließlich Klebeschicht (b) auf das EL-Element (c) oder umgekehrt mit Hilfe von Pick & Place-Automaten oder Kaschieren hergestellt werden.

Unter Elektrolumineszenz (EL) versteht man die direkte Lumineszenzanregung von Leuchtpigmenten (auch Leuchtsubtanzen oder Luminophore genannt) durch ein elektrisches Wechselfeld.

Die EL-Technologie hat in jüngster Zeit zunehmend an Bedeutung gewonnen. Sie ermöglicht die

Realisierung beinahe beliebig großer, blend- und schattenfreier, homogener Leuchtflächen. Dabei sind Leistungsaufnahme und Bautiefe (in der Größenordnung eines Millimeters und darunter) äußerst gering. Zu den typischen Anwendungen gehört neben der Hintergrundbeleuchtung von Flüssigkristall-Displays auch die Hinterleuchtung von transparenten Filmen, welche mit Beschriftungen und/oder Bildmotiven versehen sind. Somit sind transparente EL-Elemente, wie beispielsweise EL-Leuchtplatten auf der Basis von Glas oder transparentem Kunststoff, die beispielsweise als

Informationsträger, Werbetransparente oder zu dekorativen Zwecken dienen können, aus dem Stand der Technik bekannt.

Aus US2007/223211A1 ist beispielsweise bekannt, die inneren Seiten einer Speisekarte mit mindestens einem EL-Element zu hinterleuchten, um den Gästen eines Restaurants das Lesen der Speisekarte auch bei gedämpftem Licht zu ermöglichen. US2007/223211A1 offenbart ebenfalls die der EL-Anwendung zugehörige Elektronik, Schaltvorrichtung und Energieversorgung. Die Elektronik ermöglicht es unter anderem, Farbwechsel des EL-Elements zu erzeugen.

WO2006100164A1 offenbart den Aufbau eines EL-Elements mit einem Substrat, entsprechend Substrat (ca) aus Polycarbonat und einer bestimmten Wasserdampfdurchlässigkeit der Schutzschicht, entsprechend (cc), in WO2006100164A1 Schutzlaminat genannt.

Auch können solche EL-Elemente nahezu frei dreidimensional verformbar sein. Die deutsche Patentanmeldung DE 10 2006 059 203 A1 offenbart ein solches EL-Element. Damit dieses Folienelement dreidimensional verformbar ist, muss das Element einen bestimmten Schichtaufbau aufweisen. Die Verformung des Folienelements kann dann durch isostatische Hochdruckverformung erfolgen. Im Rahmen der vorliegenden Erfindung ist die Verwendung von solchen, dreidimensional verformbaren EL-Elementen insbesondere bevorzugt.

Das EL-Element kann derart gestaltet sein, dass die Seite des Substrats, die mit der EL-Anordnung versehen ist, leuchtet, oder dass ein zumindest teilweise transparentes Substrat von einer rückwärtig aufgebrachten EL-Anordnung durchleuchtet wird. Weiterhin kann das Leuchten auch zu beiden Seiten abstrahlen, falls das Substrat zumindest teilweise transparent ist.

Ein Schutzfolienlaminat (a), wie es für die vorliegende Erfindung geeignet ist, ist aus US 5,592,698 A, US 6,388,813 B1, US2002/0109922A1, US 6,536,045 B1 und US2003/0066118A1 bekannt.

Das EL-Element (c) kann erfindungsgemäß aus folgenden Schichten aufgebaut sein (herkömmlicher Aufbau):
(ca) einem zumindest teilweise transparenten Substrat;
(cb) mindestens einer auf das Substrat aufgebrachten EL-Anordnung, enthaltend die folgenden Komponenten:
   (cba) eine zumindest teilweise transparente Elektrode (Elektrodenschicht) als Frontelektrode,
   (cbb) gegebenenfalls eine erste Isolationsschicht, welche transparent oder zumindest opak sein muss,
   (cbc) eine Schicht, enthaltend mindestens ein durch ein elektrisches Feld anregbares Leuchtpigment (Elektroluminophor), EL-Schicht oder Pigmentschicht genannt,
   (cbd) gegebenenfalls eine weitere Isolationsschicht, welche transparent, opak oder undurchsichtig sein kann,
   (cbe) eine Rückelektrode(Rückelektrodenschicht),
   (cbf) eine Leiterbahn oder mehrere Leiterbahnen, zur elektrischen Kontaktierung von sowohl Komponente (cba) als auch von Komponente (cbe), wobei die Leiterbahn oder die Leiterbahnen vor, nach oder zwischen den Elektroden (cba) und (cbe) aufgebracht werden kann bzw. können, wobei vorzugsweise die Leiterbahn oder die Leiterbahnen in einem Arbeitsschritt aufgebracht werden. Die Leiterbahn oder Leiterbahnen können in Form eines Silberbusses, vorzugsweise hergestellt aus einer Silberpaste und/oder eines Silberlacks, aufgebracht sein. Eventuell kann vor dem Aufbringen des Silberbusses noch eine Graphitschicht aufgebracht werden,
(cc) eine Schutzschicht oder Schutzfolie.

Neben den genannten Schichten (ca) bis (cc) kann das erfindungsgemäß vorgesehene EL-Element weitere Schichten aufweisen. So kann der Untergrund, wenn er selbst elektrisch leitend ist, mit einer zusätzlichen Isolationsschicht, auf die dann die EL-Anordung aufgebracht wird, versehen sein oder werden. Außerdem kann das EL-Element eine oder mehreren Reflexionsschicht(en) aufweisen.

Die Reflexionsschicht umfasst vorzugsweise Glaskügelchen, insbesondere Hohlglaskügelchen. Der Durchmesser der Glaskügelchen kann in weiten Grenzen verändert werden. So können sie eine Größe d₅₀ von im Allgemeinen 5 µm bis 3 mm, vorzugsweise 10 bis 200 µm, besonders bevorzugt 20 bis 100 µm, aufweisen. Die Hohlglaskügelchen sind dabei vorzugsweise in ein Bindemittel eingebettet.

Auf dem Untergrund und/oder dem Untergrund und der EL-Anordnung können außerdem ein oder mehrere zumindest teilweise transparente grafisch gestaltete Schichten angeordnet sein.

Ebenfalls kann das EL-Element (c) erfindungsgemäß aus folgenden Schichten aufgebaut sein (inverser Schichtaufbau):
(ca) ein zumindest teilweise transparentes Substrat;
(cb) mindestens einer auf das Substrat aufgebrachten EL-Anordnung, enthaltend die folgenden Komponenten:
   (cbe) eine Rückelektrode (Rückelektrodenschicht), die zumindest teilweise transparent sein kann,
   (cbb) gegebenenfalls eine erste Isolationsschicht,
   (cbc) eine Schicht, enthaltend mindestens ein durch ein elektrisches Feld anregbares Leuchtpigment (Elektroluminophor), Elektrolumineszenz-Schicht oder Pigmentschicht genannt,
   (cbd) gegebenenfalls eine weitere Isolationsschicht,
   (cba) eine zumindest teilweise transparente Elektrode (Elektrodenschicht) als Frontelektrode,
   (cbf) eine Leiterbahn oder mehrere Leiterbahnen, zur elektrischen Kontaktierung von sowohl Komponente (cbe) als auch von Komponente (cba), wobei die Leiterbahn oder die Leiterbahnen vor, nach oder zwischen den Elektroden (cbe) und (cba) aufgebracht werden kann bzw. können, wobei vorzugsweise die Leiterbahn oder die Leiterbahnen in einem Arbeitsschritt aufgebracht werden. Die Leiterbahn oder Leiterbahnen können in Form eines Silberbusses, vorzugsweise hergestellt aus einer Silberpaste und/oder eines Silberlacks, aufgebracht sein. Eventuell kann vor dem Aufbringen des Silberbusses noch eine Graphitschicht aufgebracht werden,
(cc) eine Schutzschicht oder Schutzfolie.

Neben den genannten Schichten (ca) bis (cc) kann das erfindungsgemäß vorgesehene EL-Element mit inversem Schichtaufbau weitere Schichten aufweisen. So kann der Untergrund, wenn er selbst elektrisch leitend ist, mit einer zusätzlichen Isolationsschicht, auf die dann die EL-Anordung aufgebracht wird, versehen sein oder werden. Außerdem kann das EL-Element eine oder mehreren Reflexionsschicht(en) aufweisen.

Auf der EL-Anordnung, dessen Untergrund und/oder auf dem Schutzfolienlaminat (a), können außerdem ein oder mehrere zumindest teilweise transparente grafisch gestaltete Schichten angeordnet sein.

Für den Fachmann ist es offensichtlich, dass die für den herkömmlichen Aufbau genannten besonderen Ausführungsformen und Merkmale, soweit nicht anders bestimmt, für den inversen Schichtaufbau entsprechend gelten, und umgekehrt.

Die eine oder mehreren Isolationsschicht(en) (cbb) und/oder (cbd) sowohl beim herkömmlichen Aufbau als auch beim inversen Aufbau kann bzw. können insbesondere dann entfallen, wenn die Komponente (cbc) eine Schichtdicke aufweist, die einen Kurzschluss zwischen den beiden Elektroden Komponenten (cba) und (cbe) verhindert.

Zum Betrieb der erfindungsgemäß hergestellten EL-Anordnung weisen die Elektroden (cba) und (cbe) elektrische Anschlüsse auf, die bevorzugt an einen Seitenrand des erfindungsgemäßen Folienelements geführt werden und dort mittels Kontaktierhilfen mit einer Stromquelle kontaktiert werden. Geeignete Kontaktierhilfen sind zum Beispiel Crimpen, Klemmen, elektrisch leitender Kleber, Nieten, Schrauben und andere dem Fachmann bekannte Mittel. Die Ansteuerung des EL-Elements kann in herkömmlicher dem Fachmann bekannter Weise erfolgen.

In einer weiteren Ausgestaltung des erfindungsgemäßen Verfahrens erfolgt die Ansteuerung des resultierenden EL-Elements durch eine kapazitive Energieübertragung.

Wie bereits erwähnt, wird das erfindungsgemäße EL-Element mittels Wechselstrom betrieben. Der Wechselstrom wird dabei bevorzugt mittels eines EL-DC/AC-Inverters erzeugt. Durch das Anlegen einer Wechselspannung an die zwei Elektroden des EL-Elements wird dann die Emission einer Elektrolumineszenz erzeugt. Der Inverter ist herkömmlicherweise zusammen mit einer Steuerelektronik auf einer Leiterplatte befestigt. Die Stromversorgung kann beispielsweise durch Batterie(n), aufladbare(n) Akkumulator(en) oder durch Versorgung durch eine externe Stromquelle erfolgen. Für EL-Elemente, die nicht ortsfest sind, bietet sich naheliegenderweise eine Stromversorgung durch Batterie(n) und/oder aufladbare(n) Akkumulator(en) an.

Im Folgenden werden nunmehr Ausgestaltungen der einzelnen, zuvor näher beschriebenen Schichten einer EL-Anordnung, welche im Rahmen der vorliegenden Erfindung verwendet werden kann, beschrieben:

### Elektroden

Das erfindungsgemäß verwendete EL-Element weist eine erste zumindest teilweise transparente Elektrode, Frontelektrode (cba), und eine zweite Rückelektrode (cbe) auf.

Unter dem Ausdruck "zumindest teilweise transparent" ist im Sinne der vorliegenden Anmeldung eine Elektrode zu verstehen, die aus einem Material aufgebaut ist, welches eine Transmission von sichtbarem Licht von im Allgemeinen mehr als 60 %, vorzugsweise mehr als 70 %, besonders bevorzugt mehr als 80 %, speziell mehr als 90%, aufweist.

Die Rückelektrode (cbe) der EL-Anordnung, welche beispielsweise auf der Oberfläche des Untergrundes vorgesehen sein kann, muss nicht zwingend transparent oder opak ausgebildet sein.

Geeignete elektrische leitende Materialien für die Elektroden sind dem Fachmann an sich bekannt. Grundsätzlich bieten sich bei der Herstellung von Dickfilm-EL-Elementen mit Wechselspannungsanregung (Dickfilm-AC-EL-Elementen) mehrere Arten von Elektroden an. Zum einen sind dies im Vakuum auf Kunststofffolien gesputterte oder aufgedampfte Indium-Zinn-Oxid-Elektroden (Indium-Tin-Oxide, ITO). Sie sind sehr dünn (einige 100 Å) und bieten den Vorteil einer hohen Transparenz bei einem relativ geringen Flächenwiderstand (ca. 60 bis 600 Ω).

Ferner können Druckpasten mit ITO oder ATO (Antimon-Tin-Oxide, Antimon-Zinn-Oxid) oder intrinsisch leitfähige transparente Polymerpasten verwendet werden, aus welchen flächige Elektroden mittels Siebdruck erzeugt werden. Bei einer Dicke von ca. 5 bis 20 µm bieten derartige Elektroden nur geringere Transparenz bei hohem Flächenwiderstand (bis 50 kΩ). Sie sind weitgehend beliebig strukturiert applizierbar, und zwar auch auf strukturierten Oberflächen. Ferner bieten sie eine relativ gute Laminierbarkeit. Auch Non-ITO-Siebdruckschichten (wobei der Begriff "Non-ITO" alle Siebdruckschichten umfasst, die nicht auf Indium-Zinn-Oxid (ITO) basieren), das heißt intrinsisch leitfähige polymere Schichten mit üblicherweise nanoskaligen elektrischleitfähigen Pigmenten, beispielsweise die ATO-Siebdruckpasten mit den Bezeichnungen 7162E oder 7164 von DuPont, intrinsisch leitfähigen Polymersystemen wie dem Orgacon^{®}-System von Agfa, dem Clevios^{®} Poly-(3,4-ethylendioxythiophen)-System von H.C. Starck GmbH, dem als organisches Metall (PEDTconductive polymer polyethylene-dioxythiophene) bezeichneten System von Ormecon, leitfähigen Beschichtungs- oder Druckfarbensystemen von Panipol OY und gegebenenfalls mit hochflexiblen Bindemitteln, zum Beispiel auf Basis von PU (Polyurethanen), PMMA (Polymethylmethacrylat), PVA (Polyvinylalkohol), modifiziertes Polyanilin, können verwendet werden. Bevorzugt wird als Material der zumindest teilweise transparenten Elektrode des EL-Elements Clevios^{®} Poly-(3,4-ethylendioxythiophen)-System von H.C. Starck GmbH eingesetzt. Beispiele für elektrisch leitende Polymerfilme sind Polyaniline, Polythiophene, Polyacetylene, Polypyrrole (Handbook of Conducting Polymers, 1986) mit und ohne Metalloxid-Füllung.

Erfindungsgemäß bevorzugt werden zur Formulierung einer Druckpaste zur Herstellung der zumindest teilweise transparenten Elektrode (cba) 10 bis 90 Gew.-%, bevorzugt 20 bis 80 Gew.-%, besonders bevorzugt 30 bis 65 Gew.-%, jeweils bezogen auf das Gesamtgewicht der Druckpaste, Clevios P, Clevios PH, Clevios P AG, Clevios P HCV4, Clevios P HS, Clevios PH 500, Clevios PH 510 oder beliebige Mischungen davon verwendet. Als Lösemittel können Dimethylsulfoxid (DMSO), N,N-Dimethylformamid, N,N-Dimethylacetamid, Ethylenglykol, Glycerin, Sorbitol, Methanol, Ethanol, Isopropanol, N-Propanol, Acton, Methylethylketon, Dimethylaminoethanol, Wasser oder Gemische aus zwei oder drei oder mehreren der genannten Lösemittel verwendet werden. Die Menge an Lösemittel kann in der Druckpaste in weiten Bereichen variieren. So können in einer Formulierung einer Paste 55 bis 60 Gew.-% Lösemittel enthalten sein, während in einer anderen Formulierung etwa 35 bis 45 Gew.-% eines Lösemittelgemischs aus zwei oder mehr Lösemitteln verwendet werden. Weiterhin können als Grenzflächenadditiv und Haftaktivator Silquest A187, Neo Rez R986, Dynol 604 und/oder Mischungen aus zwei oder mehreren dieser Substanzen enthalten sein. Deren Menge beträgt 0,1 bis 5,0 Gew.-%, vorzugsweise 0,3 bis 2,5 Gew.-%, bezogen auf das Gesamtgewicht der Druckpaste.

Als Bindemittel können in der Formulierung beispielsweise UD-85, Bayhydrol PR340/1, Bayhydrol PR135 oder beliebige Mischungen davon, vorzugsweise in Mengen von etwa 0,5 bis 10 Gew.-%, bevorzugt 3 bis 5 Gew.-%, enthalten sein. Bei den eingesetzten Polyurethandispersionen, die nach dem Trocknen der Schicht das Bindemittel für die Leitschicht bilden, handelt es sich vorzugsweise um wässrige Polyurethandispersionen.

Erfindungsgemäß besonders bevorzugte Formulierungen von Druckpasten zur Herstellung der zumindest teilweise transparenten Elektrode (cba) enthalten:

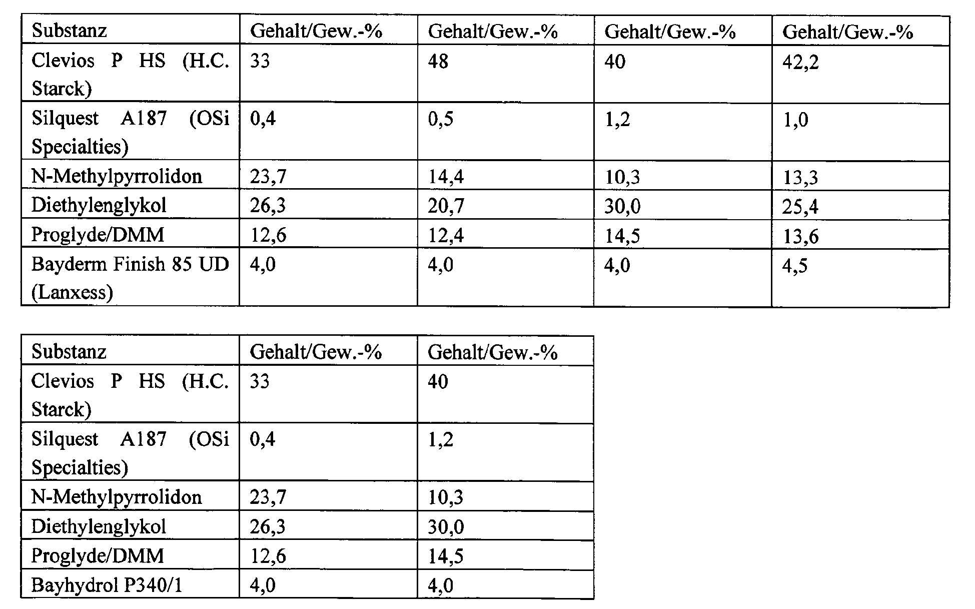

Abweichend von den oben genannten Formulierungen für die zumindest teilweise transparenten Elektrode (cba) können als fertige Formulierungen auch folgende hier beispielhaft genannte bereits fertige, kommerziell erhältliche Druckpasten erfindungsgemäß eingesetzt werden: die Orgacon EL-P1000-, EL-P3000-, EL-P5000- oder EL-P6000-Reihen von Agfa, bevorzugt die EL-P3000- und EL-P6000-Reihen (insbesondere für verformbare Anwendungen).

Darüber hinaus sind auch Zinn-Oxid (NESA) Pasten als entsprechendes Elektrodenmaterial denkbar.

Die oben beschriebenen elektrisch leitenden Materialien können darüber hinaus auf einem Trägermaterial aufgebracht sein. Als Trägermaterial bieten sich beispielsweise transparente Gläser und thermoplastische Folien an. Entsprechende Trägermaterialien werden weiter unten näher beschrieben. Im Rahmen der vorliegenden Erfindung können ein oder zwei Trägersubstrate verwendet werden

Diese Elektrodenmaterialien können beispielsweise mittels Siebdruck, Rakeln, Spritzen, Sprühen, Streichen auf entsprechende Trägermaterialien (Substrate) aufgebracht werden, wobei bevorzugt anschließend bei geringen Temperaturen von beispielsweise 80 bis 120 °C getrocknet wird.

In einer bevorzugten Ausführungsform erfolgt die Aufbringung der elektrisch leitfähigen Beschichtung mittels Vakuum oder pyrolytisch.

Besonders bevorzugt ist die elektrisch leitfähige Beschichtung eine mittels Vakuum oder pyrolytisch hergestellte metallische oder metal loxidische dünne und weitgehend transparente Schicht, die bevorzugt einen Flächenwiderstand von 5 mΩ bis 3.000 Ω/Quadrat, besonders bevorzugt einen Flächenwiderstand von 0,1 bis 1.000 Ω/Quadrat, ganz besonders bevorzugt 5 bis 30 Ω/Quadrat aufweist, und in einer weiteren bevorzugten Ausführungsform eine Tageslichtdurchlässigkeit von zumindest größer 60 % (> 60 bis 100 %) und insbesondere größer 76 % (> 76 bis 100 %) aufweist.

Darüber hinaus kann auch elektrisch leitfähiges Glas als Elektrode verwendet werden.

Eine spezielle bevorzugte Art von elektrisch leitfähigem und hochtransparentem Glas, insbesondere Floatglas, stellen pyrolytisch hergestellte Schichten dar, die ein hohe Oberflächenhärte aufweisen und deren elektrischer Oberflächenwiderstand in einem sehr weiten Bereich von im Allgemeinen einigen Milliohm bis 3.000 Ω/Quadrat eingestellt werden kann.

Derartige pyrolytisch beschichtete Gläser können gut verformt werden und weisen eine gute Kratzbeständigkeit auf, insbesondere führen Kratzer nicht zu einer elektrischen Unterbrechung der elektrisch leitenden Oberflächenschicht, sondern lediglich zu einer meist geringfügigen Erhöhung des Flächenwiderstandes.

Des Weiteren sind pyrolytisch hergestellte leitfähige Oberflächenschichten durch die Temperaturbehandlung derart stark in die Oberfläche diffundiert und in der Oberfläche verankert, dass bei einem anschließenden Materialauftrag ein extrem hoher Haftverbund zum Glassubstrat gegeben ist, was für die vorliegende Erfindung ebenfalls sehr vorteilhaft ist. Zusätzlich weisen derartige Beschichtungen eine gute Homogenität, also eine geringe Streuung des Oberflächenwiderstandswertes über große Oberflächen auf. Diese Eigenschaft stellt ebenfalls einen Vorteil für die vorliegende Erfindung dar.

Elektrisch leitfähige und hochtransparente dünne Schichten können auf einem Glassubstrat, das erfindungsgemäß bevorzugt eingesetzt wird, wesentlich effizienter und kostengünstiger als auf polymeren Substraten wie PET oder PMMA oder PC hergestellt werden. Der elektrische Flächenwiderstand ist bei Glasbeschichtungen im Schnitt um den Faktor 10 günstiger als auf einer polymeren Folie bei vergleichbarer Transparenz, also beispielsweise 3 bis 10 Ohm/Quadrat bei Glasschichten verglichen mit 30 bis 100 Ω/Quadrat auf PET-Folien.

Bei der Rückelektrode (cbe) handelt es sich - wie bei der zumindest teilweise transparenten Elektrode (cba) - um eine flächige Elektrode, die jedoch nicht transparent oder zumindest teilweise transparent sein muss. Diese ist im Allgemeinen auf die Isolationsschicht - wenn sie vorhanden ist - aufgebracht. Falls keine Isolationsschicht vorhanden ist, ist die Rückelektrode auf die Schicht enthaltend mindestens eine durch ein elektrisches Feld anregbare Leuchtsubstanz aufgebracht. In einer alternativen Ausführungsform ist die Rückelektrode auf dem zumindest teilweise transparenten Substrat (ca) aufgebracht.

Die Rückelektrode ist im Allgemeinen aus elektrisch leitenden Materialien auf anorganischer oder organischer Basis aufgebaut, beispielsweise aus Metallen wie Silber, wobei bevorzugt solche Materialien eingesetzt werden, die bei Anwendung des isostatischen Hochdruckverformungsverfahrens zur Herstellung des dreidimensional verformten EL-Elements nicht beschädigt werden. Geeignete Elektroden sind ferner insbesondere polymere elektrisch leitfähige Beschichtungen. Dabei können die bereits vorstehend bezüglich der zumindest teilweise transparenten Elektrode genannten Beschichtungen eingesetzt werden. Daneben sind solche, dem Fachmann bekannten polymeren elektrisch leitfähigen Beschichtungen einsetzbar, die nicht zumindest teilweise transparent sind.

Geeignete Materialien der Rückelektrode sind somit bevorzugt ausgewählt aus der Gruppe, bestehend aus Metallen wie Silber, Kohlenstoff, ITO-Siebdruckschichten, ATO-Siebdruckschichten, Non-ITO-Siebdruckschichten, das heißt intrinsisch leitfähige polymere Systeme mit üblicherweise nanoskaligen elektrisch leitfähigen Pigmenten, beispielsweise ATO-Siebdruckpasten mit der Bezeichnung 7162E oder 7164 von DuPont, intrinsisch leitfähigen Polymersystemen wie dem Orgacon^{®} System von Agfa, dem Clevios^{®} Poly-(3,4-ethylendioxythiophen)-System von H. C. Starck GmbH, dem als organisches Metall (PEDT conductive polymer polyethylene-dioxythiophene) bezeichneten System von Ormecon, leitfähigen Beschichtungs- und Druckfarbensystemen von Panipol Oy und gegebenenfalls mit hochflexiblen Bindemitteln, zum Beispiel auf Basis von PU (Polyurethanen), PMMA (Polymethylmethacrylat), PVA (Polyvinylalkohol), modifiziertes Polyanilin, wobei die vorstehend genannten Materialien zur Verbesserung der elektrischen Leitfähigkeit mit Metallen wie Silber oder Kohlenstoff versetzt werden können und/oder mit einer Lage aus diesen Materialien ergänzt werden können.

Die Formulierung der Druckpaste für die Rückelektrode kann der der teilweise transparenten Elektrode entsprechen.

Abweichend von dieser Formulierung kann jedoch für die Rückelektrode auch folgende Formulierung erfindungsgemäß verwendet werden.

Zur Formulierung einer Druckpaste zur Herstellung der Rückelektrode werden 30 bis 90 Gew-%, bevorzugt 40 bis 80 Gew-%, besonders bevorzugt 50 bis 70 Gew-%, jeweils bezogen auf das Gesamtgewicht der Druckpaste, der leitfähigen Polymere Clevios P, Clevios PH, Clevios P AG, Clevios P HCV4, Clevios P HS, Clevios PH, Clevios PH 500, Clevios PH 510 oder beliebige Mischungen davon verwendet. Als Lösemittel können Dimethylsulfoxid (DMSO), N,N-Dimethylformamid, N,N-Dimethylacetamid, Ethylenglykol, Glycerin, Sorbitol, Methanol, Ethanol, Isopropanol, N-Propanol, Acton, Methylethylketon, Dimethylaminoethanol, Wasser oder Mischungen aus zwei oder drei oder mehreren dieser Lösemittel verwendet werden. Die Menge an verwendetem Lösemittel kann in breiten Bereichen variieren. So können in einer erfindungsgemäßen Formulierung einer Paste 55 bis 60 Gew.-% Lösemittel enthalten sein, während in einer anderen erfindungsgemäßen Formulierung etwa 40 Gew.-% eines Lösemittelgemischs aus drei Lösemitteln verwendet werden. Weiterhin können als Grenzflächenadditiv und Haftaktivator Silquest A187, Neo Rez R986, Dynol 604 oder Mischungen aus zwei oder mehreren dieser Substanzen vorzugsweise in einer Menge von 0,7 bis 1,2 Gew.-% enthalten sein. Als Bindemittel können beispielsweise 0,5 bis 1,5 Gew.-% UD-85, Bayhydrol PR340/1, Bayhydrol PR135 oder beliebige Mischungen davon enthalten sein.

In einer weiteren erfindungsgemäßen Ausführungsform kann die Rückelektrode mit Graphit gefüllt sein. Dies kann dadurch erreicht werden, dass den oben beschriebenen Formulierungen Graphit zugegeben wird.

Abweichend von den oben genannten Formulierung für die Rückelektrode können als fertige Formulierungen auch folgende hier beispielhaft genannte bereits fertige, kommerziell erhältliche Druckpasten erfindungsgemäß eingesetzt werden: die Orgacon EL-P1000-, EL-P3000-, EL-P5000- oder EL-P6000-Reihen von Agfa, bevorzugt die EL-P3000- und EL-P6000-Reihen (für verformbare Anwendungen). Auch hier kann Graphit zugegeben werden.

Speziell für die Rückelektrode können auch die Druckpasten der Orgacon EL-P4000-Reihe, insbesondere Orgacon EL-P4010 und EL-4020, verwendet werden. Beide können in beliebigem Verhältnis miteinander gemischt werden. Orgacon EL-P4010 und EL-4020 enthalten bereits Graphit.

Auch käuflich zu erwerbende Graphitpasten können als Rückelektrode verwendet werden, beispielsweise Graphitpasten von Acheson, insbesondere Electrodag 965 SS oder Electrodag 6017 SS.

Eine erfindungsgemäß besonders bevorzugte Formulierung einer Druckpaste zur Herstellung der Rückelektrode BE enthält:

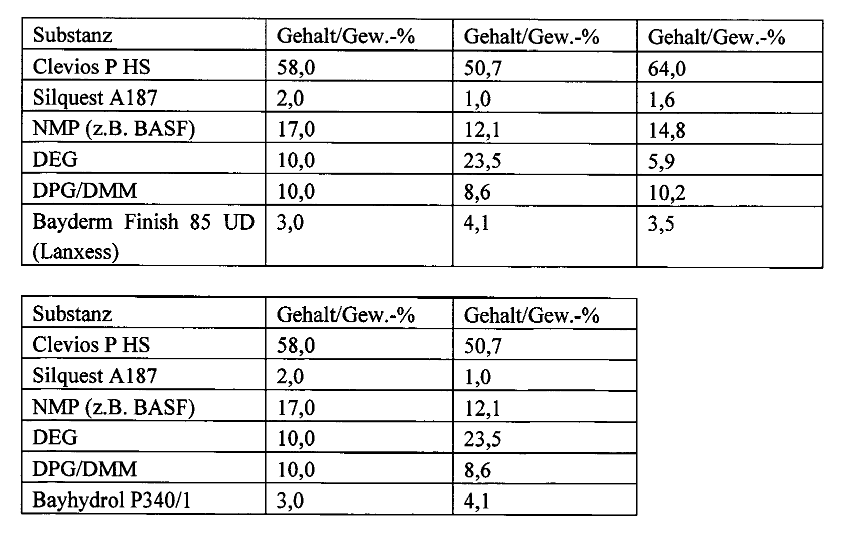

### Leiterbahnen, Anschlüsse der Elektroden

Als Leiterbahnen zur Ansteuerung der EL-Anordnung (cb) können so genannte Bus-bars (oben unter Komponente (cbf) aufgeführt) eingesetzt werden, insbesondere bei halbleitenden LEP beziehungsweise OLED Systemen, worin verhältnismäßig große Ströme fließen. Dabei werden in der Art eines Kreuzes sehr gut elektrisch leitfähige Leiterbahnen hergestellt. Auf diese Weise wird beispielsweise eine große Fläche in vier kleine Flächen unterteilt. Damit wird der Spannungsabfall im Mittelbereich einer Leuchtfläche wesentlich reduziert und die Gleichmäßigkeit der Leuchtdichte beziehungsweise der Abfall der Helligkeit in der Mitte eines Leuchtfeldes reduziert.

Bei einem zinksulfidischen partikulären EL-Feld werden im Allgemeinen beispielsweise größer 100 Volt bis über 200 Volt Wechselspannung angelegt, und es fließen bei Verwendung eines guten Dielektrikums beziehungsweise guter Isolation sehr geringe Ströme. Daher ist bei dem erfindungsgemäßen ZnS-Dickfilm-AC-EL-Element das Problem der Strombelastung wesentlich geringer als bei halbleitenden LEP beziehungsweise OLED Systemen, so dass der Einsatz von Bus-bars nicht unbedingt erforderlich ist, sondern großflächige Leuchtelemente ohne Einsatz von Bus-bars bereit gestellt werden können.

Die elektrischen Anschlüsse können beispielsweise unter Verwendung von elektrisch leitfähigen und einbrennbaren Pasten mit Zinn, Zink, Silber, Palladium, Aluminium und weiteren geeigneten leitfähigen Metallen beziehungsweise Kombinationen und Mischungen oder Legierungen daraus, hergestellt werden.

Dabei werden die elektrisch leitfähigen Kontaktierstreifen im Allgemeinen mittels Siebdruck, Pinselauftrag, Ink-Jet, Rakel, Rolle, durch Sprühen oder mittels Dispensierauftrag oder vergleichbaren dem Fachmann bekannten Auftragsmethoden auf die elektrisch leitfähigen und zumindest teilweise transparenten dünnen Beschichtungen aufgebracht und anschließend im Allgemeinen in einem Ofen thermisch behandelt, so dass üblicherweise seitlich entlang einer Sub Substratkante angebrachte Streifen gut mittels Löten, Klemmen oder Stecken elektrisch leitend kontaktiert werden können.

Solange nur geringe elektrische Leistungen auf elektrisch leitfähige Beschichtungen eingeleitet werden müssen, sind Federkontakte oder Carbon-gefüllte Gummielemente beziehungsweise so genannte Zebra-Gummistreifen ausreichend.

Als Leitkleberpasten werden bevorzugt Leitkleberpasten auf Basis von Silber, Palladium, Kupfer oder Gold gefüllter Polymerkleber verwendet. Es können ebenfalls selbstklebende elektrisch leitfähige Streifen zum Beispiel aus verzinnter Kupferfolie mit einem in z-Richtung elektrisch leitfähigen Kleber durch Anpressen appliziert werden.

Die Klebeschicht wird dabei im Allgemeinen mit einigen N/cm² Flächenpressung gleichmäßig angepresst, und es werden so je nach Ausführung Werte von 0,013 Ohm/cm² (z.B. Conductive Copper Foil Tape VE 1691 der Firma D & M International, A-8451 Heimschuh) beziehungsweise 0,005 Ohm (z.B. Type 1183 der Firma 3M Electrical Products Division, Austin, Texas USA; gemäß MIL-STD-200 Method 307 maintained at 5 psi / 3,4 N/cm² measured over 1 sq.in. surface area) oder 0,001 Ohm (z.B. Type 1345 der Firma 3M) oder 0,003 Ohm (z.B. Type 3202 der Firma Holland Shielding Systems BV) erreicht.

### Dielektrizitätsschicht

Das erfindungsgemäße El-Element weist gegebenfalls eine oder mehrere Dielektrizitätsschicht(en) als Komponente(n) (cbb) und/oder (cbd) auf, welche im Fall von Komponente (cbb) zwischen der Frontelektrode (cba) und der EL-Schicht Komponente (cbc) vorgesehen ist und im Fall von Komponente (cbd) zwischen der Rückelektrode Komponente (cbe) und der Elektrolumineszenz-Schicht Komponente (cbc) vorgesehen ist.

Entsprechende Dielektrizitätsschichten sind dem Fachmann bekannt. Entsprechende Schichten weisen häufig hoch dielektrisch wirkende Pulver wie beispielsweise Bariumtitanat auf, welche vorzugsweise in fluorhaltigen Kunststoffen oder in auf Cyan basierenden Harzen dispergiert sind. Beispiele für besonders geeignete Teilchen sind Bariumtitanat-Teilchen im Bereich von bevorzugt 1,0 bis 2,0 µm. Diese können bei einem hohen Füllgrad eine relative Dielektrizitätskonstante von bis zu 100 ergeben. Die Dielektrizitätsschicht weist eine Dicke von im Allgemeinen 1 bis 50 µm, vorzugsweise 2 bis 40 µm, besonders bevorzugt 5 bis 25 µm, speziell 8 bis 15 µm, auf.

Das EL-Element kann in einer Ausführungsform auch zusätzlich noch eine weitere Dielektrizitätsschicht aufweisen, welche übereinander angeordnet werden und zusammen die Isolationswirkung verbessern oder aber welche durch eine floatende Elektrodenschicht unterbrochen wird. Die Verwendung einer zweiten Dielektrizitätsschicht kann von der Qualität und Pinhole-Freiheit der ersten Dielektrizitätsschicht abhängen.

Als Füllstoffe werden anorganische Isolationsmaterialien verwendet, die dem Fachmann aus der Literatur bekannt sind, beispielsweise: BaTiO₃, SrTiO₃, KNbO₃, PbTiO₃, LaTaO₃, LiNbO₃, GeTe, Mg₂TiO₄, Bi₂(TiO₃)₃, NiTiO₃, CaTiO₃, ZnTiO₃, Zn₂TiO₄, BaSnO₃, Bi(SnO₃)₃, CaSnO₃, PbSnO₃, MgSnO₃, SrSnO₃, ZnSnO₃, BaZrO₃, CaZrO₃, PbZrO₃, MgZrO₃, SrZrO₃, ZnZrO_{3.} oder Mischungen von zwei oder mehreren dieser Füllstoffe. Erfindungsgemäß bevorzugt als Füllstoff sind BaTiO₃ oder PbZrO₃ oder Mischungen daraus, vorzugsweise in Füllmengen von 5 bis 80 Gew.-%, bevorzugt von 10 bis 75 Gew.-%, besonders bevorzugt von 40 bis 70 Gew.-%, jeweils bezogen auf das Gesamtgewicht der Paste, in der Paste zur Herstellung der Isolationsschicht.

Als Bindemittel für diese Schicht können Ein- oder bevorzugt Zweikomponentenpolyurethansysteme, bevorzugt der Bayer MaterialScience AG, wiederum besonders bevorzugt Desmodur und Desmophen oder die Lackrohstoffe der Lupranate-, Lupranol-, Pluracol- oder Lupraphen-Reihen der BASF AG; der Degussa AG (Evonik), vorzugsweise Vestanat, wiederum besonders bevorzugt Vestanat T und B; oder der Dow Chemical Company, wiederum bevorzugt Vorastar; verwendet werden. Weiterhin können auch hochflexible Bindemittel, zum Beispiel solche auf Basis von PMMA, PVA, insbesondere Mowiol und Poval von Kuraray Europe GmbH bzw. Kuraray Specialties Europe GmbH oder Polyviol von Wacker AG, oder PVB, inbesondere Mowital von Kuraray Europe GmbH bzw. Kuraray Specialties Europe GmbH (B 20 H, B 30 T, B 30 H, B 30 HH, B 45 H, B 60 T, B 60 H, B 60 HH, B 75 H) oder Pioloform, insbeondere Pioloform BR18, BM18 oder BT18, von Wacker AG, eingesetzt werden.

Als Lösemittel können beispielsweise Ethylacetat, Butylacetat, 1-Methoxypropylacetat-2, Toluol, Xylol, Solvesso 100, Shellsol A oder Mischungen aus zwei oder mehrere dieser Lösemittel verwendet werden. Bei Verwendung von zum Beispiel PVB als Bindemittel ferner Methanol, Ethanol, Propanol, Isopropanol, Diacetonalkohol, Benzylalkohol, 1-Methoxypropanol-2, Butylglykol, Methoxybutanol, Dowanol, Methoxypropylacetat, Methylacetat, Ethylacetat, Butylacetat, Butoxyl, Glykolsäure-n-butylester. Aceton, Methylethylketon, Methylisobutylketon, Cyclohexanon, Toluol, Xylol, Hexan, Cyclohexan, Heptan sowie Mischungen aus zwei oder mehreren der genannten Lösungsmittel in Mengen von 1 bis 30 Gew.-% bezogen auf die Gesamtmasse der Paste, bevorzugt 2 bis 20 Gew.%, besonders bevorzugt 3 bis 10 Gew.-%. Weiterhin können noch Additive wie Verlaufsmittel und Rheologieadditvie zur Verbesserung der Eigenschaften zugefügt werden. Beispiele für Verlaufsmittel sind Additol XL480 in Butoxyl in einem Mischungsverhältnis von 40:60 bis 60:40. Als weitere Additive können 0,01 bis 10 Gew.-%, bevorzugt 0,05 bis 5 Gew.-%, besonders bevorzugt 0,1 bis 2 Gew.-%, jeweils bezogen aus die Gesamtpastenmasse. Als Rheologieadditive, die das Absetzverhalten von Pigmenten und Füllstoffen in der Paste vermindern, können beispielsweise BYK 410, BYK 411, BYK 430, BYK 431 oder beliebige Mischungen davon enthalten sein.

Besonders bevorzugte Formulierungen einer Druckpaste zur Herstellung der Isolationsschicht als Komponente (f) und / oder (g) enthalten:

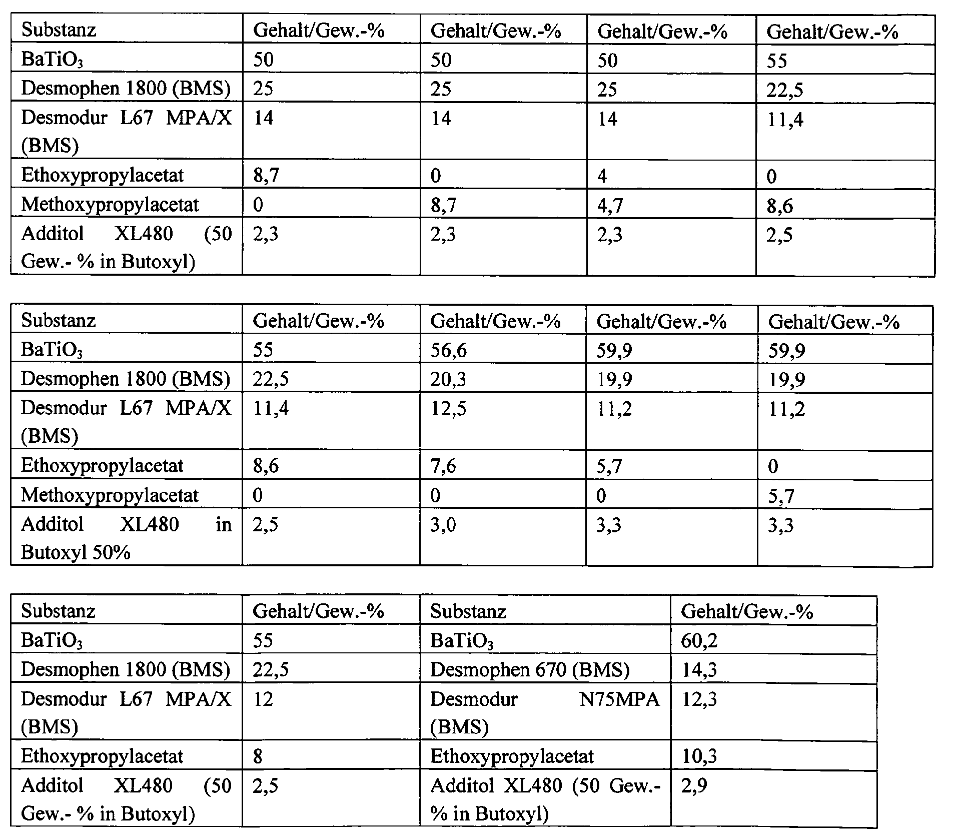

### Elektrolumineszenz-Schicht

Das erfindungsgemäße EL-Element (c) umfasst eine EL-Schicht als Komponente (cbc).

Die mindestens eine Elektroluminezenz (EL)-Schicht (cbc), ist im Allgemeinen zwischen der ersten zumindest teilweise transparenten Elektrode (cba) und einer dielektrischen Schicht (cbd) angeordnet. Dabei kann die EL-Schicht unmittelbar im Anschluss an die dielektrische Schicht angeordnet sein oder es können gegebenenfalls eine oder mehrere weitere Schichten zwischen der dielektrischen Schicht und der EL-Schicht angeordnet sein. Bevorzugt ist die EL-Schicht unmittelbar im Anschluss an die dielektrische Schicht angeordnet.

Die mindestens eine EL-Schicht (cbc) kann auf der gesamten Innenfläche der ersten zumindest teilweise transparenten Elektrode (cba) angeordnet sein oder auf einer oder mehreren Teilflächen der ersten zumindest teilweise transparenten Elektrode. In dem Fall, dass die Leuchstruktur auf mehreren Teilflächen angeordnet ist, haben die Teilflächen im Allgemeinen einen Abstand von 0,5 bis 10,0 mm, bevorzugt 1 bis 5 mm voneinander.

Die EL-Schicht (cbc) ist im Allgemeinen aus einer Bindemittelmatrix mit darin homogen dispergierten EL-Pigmenten aufgebaut. Die Bindemittelmatrix wird im Allgemeinen so gewählt, dass ein guter Haftverbund auf der Elektrodenschicht (bzw. der ggf. darauf aufgebrachten dielektrischen Schicht gegeben ist. In einer bevorzugten Ausführung werden dabei PVB oder PU basierende Systeme verwendet. Neben den EL-Pigmenten können ggf. noch weitere Zusätze in der Bindemittelmatrix vorliegen, wie farbkonvertierende organische und/oder anorganische Systeme, Farbzusatzstoffe für einen Tag- und Nacht-Lichteffekt und/oder reflektierende und/oder Licht absorbierende Effektpigmente wie Aluminiumflakes oder Glasflakes oder Mica-Plateletts.

Die in der EL-Schicht (cbc) verwendeten EL-Pigmente weisen im Allgemeinen eine Dicke von 1 bis 50 µm, vorzugsweise 5 bis 25 µm, auf.

Bevorzugt ist die mindestens eine EL-Schicht (cbc) eine Wechselstrom-Dickfilm-Pulver-EL (AC-P-EL)-Leuchtstruktur.

Dickfilm AC-EL Systeme sind seit Destriau 1947 gut bekannt und werden meist mittels Siebdruck auf ITO-PET Folien appliziert. Da zinksulfidische Elektroluminophore im Betrieb und speziell bei höheren Temperaturen und einer Wasserdampfumgebung eine sehr starke Degradation aufweisen, werden heute für langlebige Dickfilm-AC-EL-Elemente im Allgemeinen mikroverkapselte EL-Luminophore (Pigmente) verwendet. Es ist jedoch ebenfalls möglich, in dem erfindungsgemäßen EL-Element ©nicht mikroverkapselte Pigmente einzusetzen, wie nachstehend weiter ausgeführt wird.

Unter EL-Elementen werden im Sinne der vorliegenden Erfindung Dickfilm-EL Systeme verstanden, die mittels Wechselspannung bei normativ 100 Volt und 400 Hertz betrieben werden und derart ein so genanntes kaltes Licht von einigen cd/m² bis zu einigen 100 cd/m² emit tieren. In derartigen anorganischen Dickfilm-Wechselspannungs-EL-Elementen werden im Allgemeinen EL-Siebdruckpasten verwendet.

Derartige EL-Siebdruckpasten werden im Allgemeinen auf Basis anorganischer Substanzen aufgebaut. Geeignete Substanzen sind z.B. hochreine ZnS, CdS, ZnₓCd₁₋ₓS Verbindungen der Gruppen II und IV des Periodensystems der Elemente, wobei besonders bevorzugt ZnS eingesetzt wird. Die vorstehend genannten Substanzen können dotiert oder aktiviert werden und gegebenenfalls des Weiteren coaktiviert werden. Zur Dotierung werden z.B. Kupfer und/oder Mangan eingesetzt. Die Coaktivierung erfolgt z.B. mit Chlor, Brom, Iod und Aluminium. Der Gehalt an Alkali- und Selten-Erd-Metallen ist in den vorstehend genannten Substanzen im Allgemeinen sehr gering, falls diese überhaupt vorliegen. Ganz besonders bevorzugt wird ZnS eingesetzt, das bevorzugt mit Kupfer und/oder Mangan dotiert beziehungsweise aktiviert wird und bevorzugt mit Chlor, Brom, Iod und/oder Aluminium coaktiviert wird.

Übliche EL-Emissionsfarben sind gelb, grün, grün-blau, blau-grün und weiß, wobei die Emissionsfarbe weiß oder rot durch Mischungen geeigneter EL-Luminophore gewonnen werden kann oder durch Farbkonversion. Die Farbkonversion kann im Allgemeinen in Form einer konvertierenden Schicht und/oder der Beimengung entsprechender Farbstoffe und Pigmente in den polymeren Binder der Siebdruckfarben beziehungsweise der polymeren Matrix, in die die EL-Pigmente eingebaut sind, erfolgen.

In einer weiteren Ausführungsform der vorliegenden Erfindung sind die zur Herstellung der EL-Schicht (cbc) eingesetzte Siebdruckmatrix mit lasierenden, farbfilternden oder mit farbkonvertierenden Farbstoffen und/oder Pigmenten versehen sind. Auf diese Weise kann eine Emissionfarbe Weiß oder ein Tag-Nacht-Lichteffekt generiert werden.

In einer weiteren Ausführungsform werden in der EL-Schicht Pigmente eingesetzt, die eine Emission im blauen Wellenlängenbereich von 420 bis 480 nm aufweisen und mit einer farbkonvertierenden Mikroverkapselung versehen sind. Auf diese Weise kann die Farbe Weiß emittiert werden.

In einer Ausführungsform werden als Pigmente in der EL-Schicht (cbc) AC-P-EL Pigmente eingesetzt, die eine Emission im blauen Wellenlängenbereich von 420 bis 480 nm aufweisen. Zusätzlich weist die AC-P-EL Siebdruckmatrix bevorzugt wellenlängenkonventierende anorganische feine Partikel auf Basis von Europium (II) aktivierten Erdalkali-ortho-Silikat Phosphoren wie (Ba, Sr, Ca)₂SiO₄:Eu²⁺ oder YAG Phosphoren wie Y₃Al₅O₁₂:Ce³⁺ oder Tb₃Al₅O₁₂:Ce³⁺ oder Sr₂GaS₄:Eu²⁺ oder SrS:Eu²⁺ oder (Y,Lu,Gd,Tb)3(Al,Sc,Ga)₅O₁₂:Ce³⁺ oder (Zn,Ca,Sr)(S,Se):Eu²⁺ auf. Auf diese Weise kann eine weiße Emission erzielt werden.

Entsprechend dem Stand der Technik können die vorstehen genannten EL-Luminophore mikroverkapselt werden. Durch die anorganische Mikroverkapselungstechnologie sind gute Halbwertszeiten erzielbar. Beispielhaft sei hier das EL-Siebdrucksystem Luxprint^{®} for EL der Firma E.I. du Pont de Nemours and Companies genannt. Organischen Mikroverkapselungstechnologien und Folienhüll-Laminate auf Basis der diversen thermoplastischen Folien sind grundsätzlich ebenfalls geeignet, haben sich jedoch als teuer und nicht wesentlich lebensdauerverlängernd erwiesen.

Geeignete zinksulfidische mikroverkapselte EL- Luminophore werden von der Firma Osram Sylvania, Inc. Towanda unter dem Handelsnamen GlacierGLO™ Standard, High Brite und Long Life und von der Firma Durel Division der Rogers Corporation, unter den Handelsnamen 1PHS001^{®} High-Efficiency Green Encapsulated EL Phosphor, 1PHS002^{®} High-Efficiency Blue-Green Encapsulated EL Phosphor, 1PHS003® Long-Life Blue Encapsulated EL Phosphor, 1PHS004^{®} Long-Life Orange Encapsulated EL Phosphor, angeboten.

Die mittleren Teilchendurchmesser der in der EL-Schicht geeigneten mikroverkapselten Pigmente betragen im Allgemeinen 15 bis 60 µm, bevorzugt 20 bis 35 µm.

In der EL-Schicht (cbc) können auch nicht mikroverkapselte feinkörnige EL-Pigmente, bevorzugt mit einer hohen Lebensdauer, eingesetzt werden. Geeignete nicht mikroverkapselte feinkörnige zinksulfidische EL-Luminophore sind z.B. in US 6,248,261 und in WO 01/34723 offenbart. Diese weisen bevorzugt ein kubisches Kristallgefüge auf. Die nicht mikroverkapselten Pigmente haben bevorzugt mittlere Teilchendurchmesser von 1 bis 30 µm, besonders bevorzugt 3 bis 25 µm, ganz besonders bevorzugt 5 bis 20 µm.

Speziell nicht mikroverkapselte EL-Pigmente können mit kleineren Pigmentabmessungen bis unter 10 µm verwendet werden. Dadurch kann die Durchsichtigkeit des Glaselementes erhöht werden.

Somit können geeigneten Siebdruckfarben unverkapselte Pigmente beigemengt werden, bevorzugt unter Berücksichtigung der speziellen hygroskopischen Eigenschaften der Pigmente, bevorzugt der ZnS-Pigmente. Dabei werden im Allgemeinen Bindemittel verwendet, die einerseits eine gute Adhäsion zu sogenannten ITO-Schichten (Indium-ZinnOxid) oder intrinsisch leitfähige polymeren transparenten Schichten haben, und des Weiteren gut isolierend wirken, das Dielektrikum verstärken und damit eine Verbesserung der Durchschlagsfestigkeit bei hohen elektrischen Feldstärken bewirken und zusätzlich im ausgehärteten Zustand eine gute Wasserdampfsperre aufweisen und die Phosphorpigmente zusätzlich schützen und Lebensdauer verlängernd wirken.

In einer Ausführungsform der vorliegenden Erfindung werden in der AC-P-EL-Leuchtschicht Pigmente eingesetzt, die nicht mikroverkapselt sind.

Die Halbwertzeiten der geeignete Pigmente in der EL-Schicht (cbc), also jene Zeit, in der die Initialhelligkeit des erfindungsgemäßen EL-Elements auf die Hälfte abgesunken ist, betragen im Allgemeinen bei 100 bzw. 80 Volt und 400 Hertz 400 bis maximal 5000 Stunden, üblicherweise jedoch nicht mehr als 1000 bis 3500 Stunden.

Die Helligkeitswerte (EL-Emission) betragen im Allgemeinen 1 bis 200 cd/m², bevorzugt 3 bis 100 cd/m², und liegen bei großen Leuchtflächen besonders bevorzugt im Bereich von 1 bis 40 cd/m².

Es können jedoch auch Pigmente mit längeren oder kürzeren Halbwertszeiten und höheren oder niedrigeren Helligkeitswerten in der EL-Schicht (cbc) des erfindungsgemäßen EL-Elements eingesetzt werden.

In einer weiteren Ausführungsform der vorliegenden Erfindung weisen die in der EL-Schicht (cbc) vorliegenden Pigmente einen derart kleinen mittleren Teilchendurchmesser auf, beziehungsweise einen derart geringen Füllgrad in der EL-Schicht (cbc), beziehungsweise die einzelnen EL-Schichten (cbc) sind geometrisch derart klein ausgeführt, beziehungsweise der Abstand der einzelnen EL-Schichten (cbc) wird derart groß gewählt, so dass das EL-Element (c) bei nicht elektrisch aktivierter Leuchtstruktur als zumindest teilweise durchsichtig gestaltet ist beziehungsweise eine Durchsicht gewährleistet ist. Geeignete Pigmentteilchendurchmesser, Füllgrade, Abmessungen der Leuchtelemente und Abstände der Leuchtelemente sind vorstehend genannt.

Die Schicht enthält die oben genannten gegebenenfalls dotierten ZnS-Kristalle, bevorzugt wie oben beschrieben mikroverkapselt, vorzugsweise in einer Menge von 40 bis 90 Gew.-%, bevorzugt von 50 bis 80 Gew.-%, besonders bevorzugt 55 bis 70 Gew.-%, jeweils bezogen auf das Gewicht der Paste.

Als Bindemittel können Ein- und bevorzugt Zweikomponentenpolyurethane verwendet werden. Erfindungsgemäß bevorzugt sind hochflexible Materialien der Bayer MaterialScience AG, beispielsweise die Lackrohstoffe der Desmophen- und Desmodur-Reihen, vorzugsweise Desmophen und Desmodur, oder die Lackrohstoffe der Lupranate-, Lupranol-, Pluracol- oder Lupraphen-Reihen der BASF AG. Als Lösemittel können Ethoxypropylacetat, Ethylacetat, Butylacetat, Methoxypropylacetat, Aceton, Methylethylketon, Methylisobutylketon, Cyclohexanon, Toluol, Xylol, Solventnaphtha 100 oder beliebige Mischungen von zwei oder mehreren dieser Lösemittel in Mengen von vorzugsweise 1 bis 50 Gew.-%, bevorzugt 2 bis 30 Gew.-%, besonders bevorzugt 5 bis 15 Gew.-%, jeweils bezogen auf die Gesamtpastenmasse, verwendet werden. Weiterhin können andere hochflexible Bindemittel, zum Beispiel solche auf Basis von PMMA, PVA, insbesondere Mowiol und Poval von Kuraray Europe GmbH (heißt jetzt Kuraray Specialties oder Polyviol von Wacker AG, oder PVB, inbesondere Mowital von Kuraray Europe GmbH (B 20 H, B 30 T, B 30 H, B 30 HH, B 45 H, B 60 T, B 60 H, B 60 HH, B 75 H), oder Pioloform, insondere Pioloform BR18, BM18 oder BT18, von Wacker AG, sein. Bei Verwendung von Polymerbindemittel wie zum Beispiel PVB können weiterhin Lösungsmittel wie Methanol, Ethanol, Propanol, Isopropanol, Diacetonalkohol, Benzylalkohol, 1-Methoxypropanol-2, Butylglykol, Methoxybutanol, Dowanol, Methoxypropylacetat, Methylacetat, Ethylacetat, Butylacetat, Butoxyl, Glykolsäure-n-butylester. Aceton, Methylethylketon, Methylisobutylketon, Cyclohexanon, Toluol, Xylol, Hexan, Cyclohexan, Heptan sowie Mischungen aus zwei oder mehreren der genannten in Mengen von 1 bis 30 Gew.-% bezogen auf die Gesamtmasse der Paste, bevorzugt 2 bis 20 Gew.%, besonders bevorzugt 3 bis 10 Gew.-% zugesetzt werden. Weiterhin können 0,1 bis 2 Gew.-% Additive zur Verbesserung des Fließverhaltens und des Verlaufs enthalten sein. Beispiele für Verlaufsmittel sind Additol XL480 in Butoxyl in einem Mischungsverhältnis von 40:60 bis 60:40. Als weitere Additive können 0,01 bis 10 Gew.-%, bevorzugt 0,05 bis 5 Gew.-%, besonders bevorzugt 0,1 bis 2 Gew.-%, jeweils bezogen aus die Gesamtpastenmasse, Rheologieadditive enthalten sein, die das Absetzverhalten von Pigmenten und Füllstoffen in der Paste vermindern, beispielsweise BYK 410, BYK 411, BYK 430, BYK 431 oder beliebige Mischungen davon.

Erfindungsgemäß besonders bevorzugte Formulierungen von Druckpasten zur Herstellung der EL-Schicht als Komponente (cbc) enthalten:

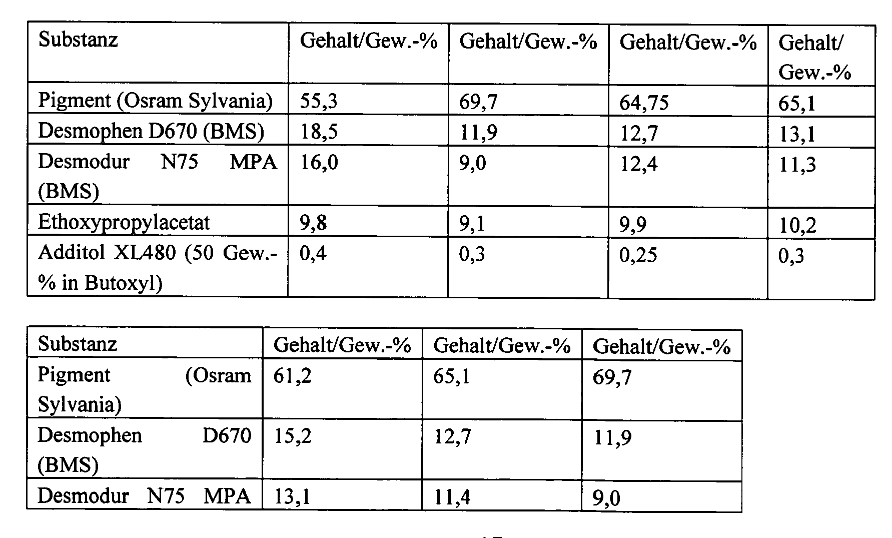

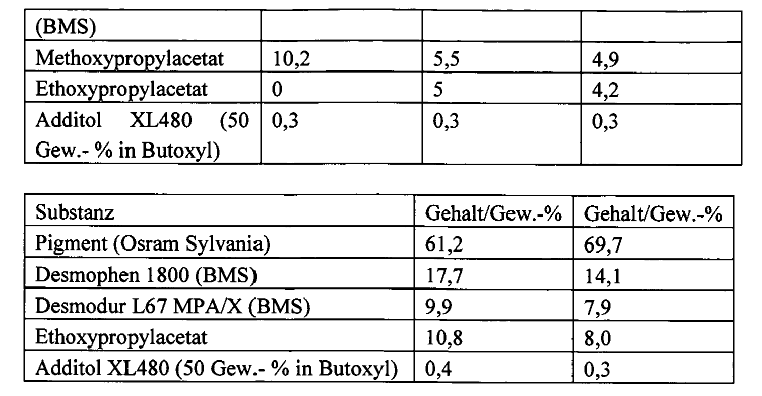

### Schutzschicht

Neben den Komponenten (ca) und (cb) kann das Elektrolumineszenz-Element eine Schutzschicht, Komponente (cc), umfassen, um eine Zerstörung des Elektrolumineszenz-Elements bzw. der gegebenenfalls vorhandenen graphischen Darstellungen zu vermeiden. Geeignete Materialien der Schutzschicht (cc) sind dem Fachmann bekannt. Geeignete Schutzschichten (cc) sind beispielsweise hochtemperaturbeständige Schutzlacke wie Schutzlacke, die Polycarbonate und Bindemittel enthalten. Ein Beispiel für einen solchen Schutzlack ist Noriphan^{®} HTR von Pröll, Weißenburg.

Alternativ kann die Schutzschicht (cc) auch auf Basis von flexiblen Polymeren wie Polyurethanen, PMMA, PVA, PVB formuliert werden. Hierfür können Polyurethane von Bayer MaterialScience AG verwendet werden. Diese Formulierung kann auch mit Füllstoffen versehen sein. Hierfür geeignet sind alle dem Fachmann bekannten Füllstoffe, beispielsweise auf Basis anorganischer Metalloxide wie TiO₂, ZnO, Lithopone, etc mit einem Füllgrad von 10 bis 80 Gew.% der Druckpaste, bevorzugt von 20 bis 70 %, besonders bevorzugt von 40 bis 60 %. Weiterhin können die Formulierungen Verlaufsmittel sowie Rheologieadditive enthalten. Als Lösemittel können beispielsweise. Ethoxypropylacetat, Ethylacetat, Butylacetat, Methoxypropylacetat, Aceton, Methylethylketon, Methylisobutylketon, Cyclohexanon, Toluol, Xylol, Solventnaphtha 100 oder Mischungen aus zwei oder mehreren dieser Lösemittel verwendet werden.

Erfindungsgemäß besonders bevorzugte Formulierungen der Schutzschicht (cc) als Lack enthalten zum Bespiel:

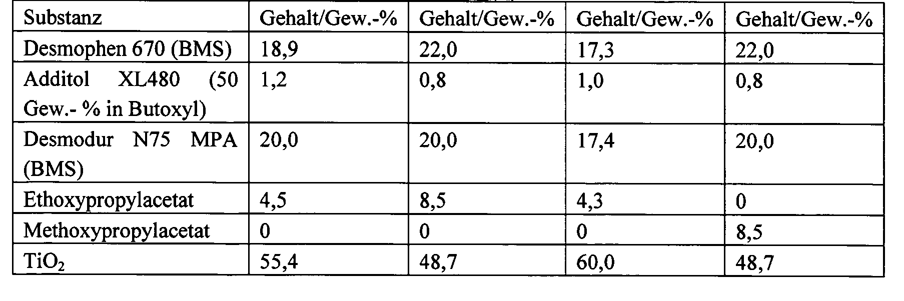

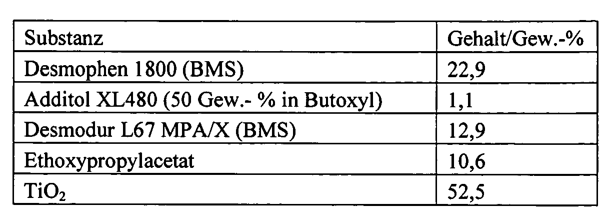

Alternativ kann die Schutzschicht (cc) auch als Schutzfolie (cc) ausgebildet sein. Geeignete Folien dafür sind dem Fachmann bekannt.

### Substrate

Das Elektrolumineszenz-Element (c) kann auf einer oder auf beiden Seiten an den jeweiligen Elektroden Substrate (ca), wie beispielsweise Gläser, Kunststofffolien oder dergleichen aufweisen.

Bei dem Elektrolumineszenz-Element (c) ist es bevorzugt, dass zumindest das Substrat (ca), welches mit der transparenten Elektrode (cba) in Kontakt steht, innenseitig grafisch lasierend transluzent und opak abdeckend gestaltet ist. Unter einer opaken abdeckenden Gestaltung wird ein großflächiger Elektrolumineszenzbereich verstanden, der durch eine hochauflösende grafische Gestaltung opak abgedeckt wird und/oder lasierend beispielsweise im Sinne von rot - grün - blau transluzent für Signalzwecke ausgebildet ist.

Darüber hinaus ist es bevorzugt, dass das Substrat, welches mit der transparenten Elektrode (cba) in Kontakt steht, eine Folie ist, welche unterhalb Glasübergangstemperatur Tg kaltreckbar verformbar ist. Hierdurch ergibt sich die Möglichkeit, dass resultierende EL-Element (c) dreidimensional zu verformen.

Darüber hinaus ist es bevorzugt, dass das Substrat (ca), welches mit der Rückelektrode (cbe) in Kontakt steht eine, Folie ist, welche ebenfalls unterhalb der Glasübergangstemperatur Tg kaltreckbar verformbar ist. Hierdurch ergibt sich die Möglichkeit, dass resultierende EL-Element (c) dreidimensional zu verformen.

Das EL-Element (c) ist damit dreidimensional verformbar, wobei die Krümmungsradien kleiner als 2 mm, bevorzugt kleiner als 1 mm sein können. Der Verformungswinkel kann dabei größer als 60°, bevorzugt größer als 75°, besonders bevorzugt größer als 90 , insbesondere größer als 105° sein.

Darüber hinaus ist es bevorzugt, dass das EL-Element (c) dreidimensional verformbar ist und insbesondere unterhalb Glasübergangstemperatur Tg kaltreckbar verformbar ist und derart eine präzise geformte dreidimensionale Gestalt erhält.

Das dreidimensional verformte EL-Element (c) kann in einem Spritzgusswerkzeug auf zumindest einer Seite mit einem thermoplastischen Kunststoff angeformt werden.

### Schutzfolienlaminat

Vorzugsweise bestehen die Schichten des Schutzfolienlaminats (a) aus einem Material ausgewählt aus der Gruppe bestehend aus Polyester, Polyvinylchlorid, Polyurethan, Polycarbonat, Polymethylmethacrylat oder einem Polyolefin, vorzugsweise Polyethylen oder Polypropylen. Besonders bevorzugt bestehen die Schichten des Schutzfolienlaminats (a) aus einem Polyethylenterephthalat (PET), insbesondere aus einem biaxial orientierten Polyethylenterephthalat (BOPET), wie es beispielsweise unter der Marke Mylar der Fa. DuPont erhältlich ist.

Vorzugsweise bestehen die Schichten des Schutzfolienlaminats (a) jeweils aus dem gleichen Material.

Vorzugsweise ist zwischen den Schichten des Schutzfolienlaminats (a) jeweils eine klare Klebstoffschicht angeordnet. Bevorzugt umfasst die Klebstoffschicht ein Material, das aus der Gruppe ausgewählt ist, die aus haftklebenden Polymeren auf Basis von Acrylsäure und/oder Methacrylsäure sowie deren Estern, Polyacrylaten, Isobutylen, Polyvinylacetat, Ethylen- Vinylacetat, natürlichen und/oder synthetischen Kautschuken, beispielsweise Acrylnitril-Butadien-Kautschuk, Butylkautschuk oder Neoprenkautschuk, Styrol-Dien-Copolymeren wie Styrol-Butadien-Blockcopolymeren und Heißschmelzklebern besteht, oder das auf Basis von haftklebenden Silikonpolymeren oder Polysiloxanen hergestellt ist. Besonders bevorzugt besteht der Klebstoff aus klaren wasserbasierten haftklebenden Polymeren auf Basis von Acrylsäure und/oder Methacrylsäure. Klar bedeutet dabei, dass die Klebstoffschicht eine Transmission von sichtbarem Licht von im Allgemeinen mehr als 90 %, vorzugsweise mehr als 95 %, besonders bevorzugt mehr als 99 %, speziell mehr als 99,5% aufweist.

Vorzugsweise ist die Klebstoffschicht vollflächig oder nicht vollflächig im Bezug auf den Untergrund aufgetragen.

Ein Sonderfall der Klebstoffschicht ist die Klebstoffschicht (b), mit der das Schutzfolienlaminat (a) sowohl auf dem EL-Element, als auch auf dem Untergrund aufgebracht ist. Vorzugsweise besitzt die Klebstoffschicht (b) die gleiche Zusammensetzung und Art wie die Klebstoffschichten zwischen den Folien des Schutzfolienlaminats (a). Abhängig von der Anwendung des EL-Folienverbundes und des Untergrundes kann aber auch eine andere Zusammensetzung und Art der Klebstoffschicht (b) gewählt werden. Möglich ist auch das die Klebstoffschicht (b) in den Bereichen, in denen sie auf der EL-Folie aufliegt, eine andere Zusammensetzung und Art hat, als in den Bereichen, in denen sie auf dem Untergrund aufliegt.

Bevorzugt weisen die Schichten des Schutzfolienlaminats (a) an wenigstens einer Seite der Schichten einen Streifen auf. Wiederum vorzugsweise ist dieser Streifen nicht mit einer Klebstoffschicht auf der darunterliegenden Schicht des Schutzfolienlaminats (a) verbunden. Der Streifen ermöglicht das einfache und sichere Entfernen einer Schicht des Schutzfolienlaminats (a) durch Reißen.

Vorzugsweise ist die Haftung der untersten Schicht des Schutzfolienlaminats (a) mit der dem EL-Element (c) stärker ist als jeweils die Haftung zwischen den einzelnen Schichten des Schutzfolienlaminats (a). Dadurch wird ermöglicht, eine einzelne Schicht des Schutzfolienlaminats (a) zu entfernen, ohne dabei das gesamte Schutzfolienlaminat (a) vom EL-Element (c) zu entfernen. Die Haftung der untersten Schicht des Schutzfolienlaminats (a) mit der dem EL-Element (c) kann aber auch gleich der Haftung zwischen den einzelnen Schichten des Schutzfolienlaminats (a) sein.

Erfindungsgemäß ist es möglich, dass die Schichten (ca), (cb) und (cc) in Bezug auf das Schutzfolienlaminat (a) nur teilflächig ausgeführt sind.

Sowohl die Schichten des Schutzfolienlaminats (a) als auch die Klebstoffschichten einschließlich der Klebstoffschicht (b) weisen vorzugsweise einen Brechungsindex bei einer Temperatur von 20 °C im Bereich von 1,40 bis 1,52 auf, wobei der Unterschied der Brechungsindizes zwischen den Schichten des Schutzfolienlaminats (a) und den Klebstoffschichten einschließlich der Klebstoffschicht (b) maximal 0,2 beträgt. Auf diese Weise wird erreicht, dass die Intensität der Strahlung des EL-Elements nicht verringert wird.
Bevorzugt weisen die Schichten des Schutzfolienlaminats (a) eine Dicke im Bereich von 0,01 bis 0,3 mm, bevorzugt im Bereich von 0,012 bis 0,2 mm, besonders bevorzugt im Bereich von 0,02 bis 0,1 mm auf.

Ein weiterer Gegenstand der vorliegenden Erfindung ist die Verwendung eines EL-Folienverbundes als Beleuchtung auf einem Kraftfahrzeug. Die Position des mindestens einen EL-Folienverbundes auf dem Kraftfahrzeug kann dabei beliebig gewählt werden.

Im Rahmen der vorliegenden Erfindung wird unter dem Begriff auf einem Kraftfahrzeug verstanden, dass ein Kraftfahrzeug dergestalt mit dem mindestens einen EL-Folienverbund versehen ist, dass der EL-Folienverbund dem Betrachter auffällt und von diesem erkannt wird, ihm also praktisch ins Auge fällt, insbesondere wenn der EL-Folienverbund leuchtet.

Auch die Größe des mindestens einen EL-Folienverbundes auf dem Kraftfahrzeug kann beliebig gewählt werden. Beide Parameter, das heißt Position und Größe, sind jedoch vorzugsweise so gewählt, dass die zuvor genannte Aufgabe der vorliegenden Erfindung gelöst wird, das heißt dass der EL-Folienverbund ausreichend groß ist und an denjenigen Position des Kraftfahrzeuges positioniert ist, so dass das Kraftfahrzeug dem Betrachter auffällt und von diesem leicht erkannt wird.

Um die erfindungsgemäße Aufgabe wirkungsvoll zu lösen kann es jedoch bevorzugt oder erforderlich sein, mehr als einen EL-Folienverbund auf dem Kraftfahrzeug zu verwenden. In weiteren Ausgestaltungen der vorliegenden Erfindung werden daher 2, 3, 4, 5, 6, 7, 8, 9,10 oder mehr EL-Folienverbunde auf dem Kraftfahrzeug verwendet.

Die einzelnen EL-Folienverbunde können dabei eine identische oder unterschiedliche Ausgestaltung, das heißt insbesondere Größe, Form und Farbe, aufweisen. Die einzelnen EL-Folienverbunde können dabei an beliebiger Position auf dem Kraftfahrzeug angebracht werden. Insbesondere ist es möglich, dass sich auch einzelne EL-Folienverbunde überlagern.

Der mindestens eine EL-Folienverbund kann dabei in einer ansprechenden und/oder auffallenden äußeren Erscheinung angebracht sein, um dem Kraftfahrzeug als ganzem ein angenehmes und oder auffälliges Äußeres zu verleihen.

Im Übrigen ist der erfindungsgemäße EL-Folienverbund vorteilhaft überall dort verwendbar, wo EL-Elemente eingesetzt werden können und sollen, und wo eine schnelle Reinigung des EL-Elementes gewünscht ist.

Ein weiterer Gegenstand der vorliegenden Erfindung ist daher die Verwendung eines EL-Folienverbundes als Beleuchtung an Hauswänden, Werbesäulen, Plakatwänden, Schaufenstern, Wandungen von Haltestellen des öffentlichen Nahverkehrs, insbesondere zu Werbezwecken, als Dekorationsbeleuchtung, als Sicherheitsbeleuchtung im Straßenverkehr, in der Luft- und Raumfahrt und beim Militär.

Erfindungsgemäß ist es auch vorgesehen, dass der EL-Folienverbund mehr als ein EL-Element (c) aufweist, die Licht gleicher oder unterschiedlicher Farbe abstrahlen können, und die getrennt voneinander elektronisch angesteuert werden können, so dass ein animiertes Leuchtbild erreicht werden kann.

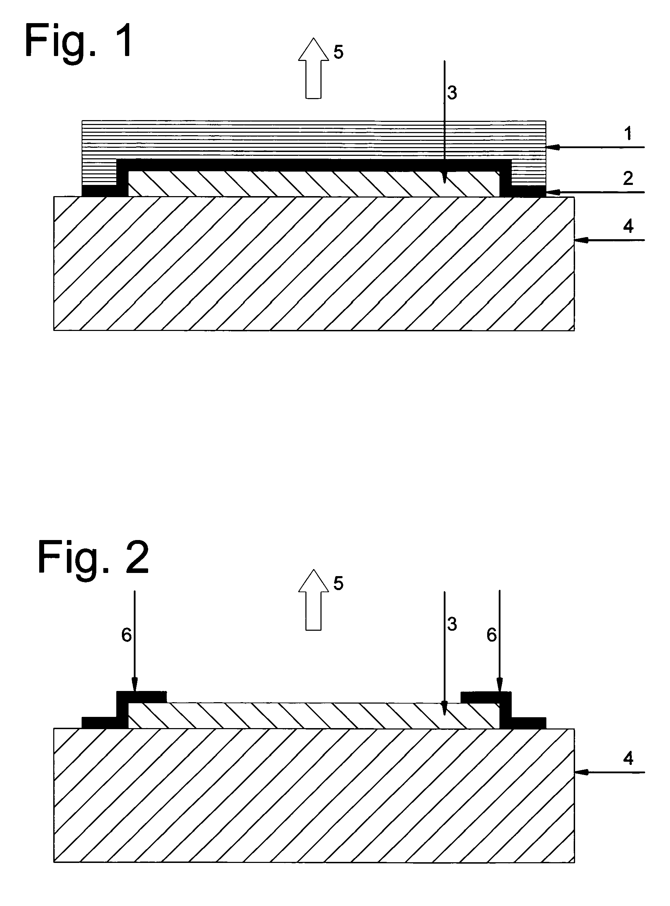

Ein erfindungsgemäßer EL-Folienverbund auf einem Untergrund ist in Fig. 1 wiedergegeben. Fig. 2 zeigt ein EL-Element (c), dass in herkömmlichere Weise auf einem Untergrund aufgebracht ist.
- 1: Schutzfolienlaminat (a);
- 2: Klebstoffschicht (b);
- 3: EL-Elememt (c);
- 4: Untergrund;
- 5: Leuchtrichtung;
- 6: Klebeband (einseitig klebend).

## Patentansprüche

**1.** Elektrolumineszierender Folienverbund aufweisend eine Schichtenfolge umfassend
ein Schutzfolienlaminat (a) mit einer Klebstoffschicht (b),
und ein EL-Element (c) umfassend
wenigstens eine obere Elektrodenschicht (cba),
wenigstens eine EL-Schicht (cbc) und
wenigstens eine untere Elektrodenschicht (cbe), **dadurch gekennzeichnet, dass** das Schutzfolienlaminat (a) wenigstens eine Schicht umfasst.

**2.** Elektrolumineszierender Folienverbund nach Anspruch 1, **dadurch gekennzeichnet, dass** das Schutzfolienlaminat (a) wenigstens 2 Schichten, bevorzugt wenigstens 15 Schichten, aufweist.

**3.** Elektrolumineszierender Folienverbund nach Anspruch 1 oder 2, **dadurch gekennzeichnet, dass** die Schichten des Schutzfolienlaminats (a) aus einem Material ausgewählt aus der Gruppe bestehend aus Polyester, bevorzugt Polyethylenterephthalat (PET), besonders bevorzugt aus einem biaxial orientierten Polyethylenterephthalat (BOPET), Polyvinylchlorid, Polyurethan, Polycarbonat, Polymethylmethacrylat, oder Polyolefin, bevorzugt Polyethylen oder Polypropylen, bestehen.

**4.** Elektrolumineszierender Folienverbund nach einem oder mehreren der Ansprüche 1 bis 3, **dadurch gekennzeichnet, dass** die Schichten des Schutzfolienlaminats (a) jeweils aus dem gleichen Material bestehen.

**5.** Elektrolumineszierender Folienverbund nach einem oder mehreren der Ansprüche 1 bis 4, **dadurch gekennzeichnet, dass** zwischen den Schichten des Schutzfolienlaminats (a) jeweils eine klare Klebstoffschicht (b) angeordnet ist.

**6.** Elektrolumineszierender Folienverbund nach einem oder mehreren der Ansprüche 1 bis 5, **dadurch gekennzeichnet, dass** die Klebstoffschicht (b) ein Material umfasst, das aus der Gruppe ausgewählt ist, die aus haftklebenden Polymeren auf Basis von Acrylsäure und/oder Methacrylsäure, bevorzugt aus klaren wasserbasierten haftklebenden Polymeren auf Basis von Acrylsäure und/oder Methacrylsäure, sowie deren Estern, Polyacrylaten, Isobutylen, Polyvinylacetat, Ethylen- Vinylacetat, natürlichen und/oder synthetischen Kautschuken, beispielsweise Acrylnitril-Butadien-Kautschuk, Butylkautschuk oder Neoprenkautschuk, Styrol-Dien- Copolymeren wie Styrol-Butadien-Blockcopolymeren und Heißschmelzklebern besteht, oder das auf Basis von haftklebenden Silikonpolymeren oder Polysiloxanen hergestellt ist.

**7.** Elektrolumineszierender Folienverbund nach einem oder mehreren der Ansprüche 1 bis 6, **dadurch gekennzeichnet, dass** die Klebstoffschicht (b) vollflächig oder nicht vollflächig aufgetragen ist.

**8.** Elektrolumineszierender Folienverbund nach einem oder mehreren der Ansprüche 1 bis 7, **dadurch gekennzeichnet, dass** die Schichten des Schutzfolienlaminats (a) an wenigstens einer Seite der Schichten einen Streifen aufweisen.

**9.** Elektrolumineszierender Folienverbund nach einem oder mehreren der Ansprüche 1 bis 8, **dadurch gekennzeichnet, dass** die Haftung der untersten Schicht des Schutzfolienlaminats (a) mit dem EL-Element (c) stärker ist als jeweils die Haftung zwischen den einzelnen Schichten des Schutzfolienlaminats (a).

**10.** Elektrolumineszierender Folienverbund nach einem oder mehreren der Ansprüche 1 bis 9, **dadurch gekennzeichnet, dass** sowohl die Schichten des Schutzfolienlaminats (a) als auch die Klebstoffschichten einschließlich der Klebstoffschicht (b) einen Brechungsindex bei einer Temperatur von 20 °C im Bereich von 1,40 bis 1,52 aufweisen.

**11.** Elektrolumineszierender Folienverbund nach einem oder mehreren der Ansprüche 1 bis 10, **dadurch gekennzeichnet, dass** der Unterschied der Brechungsindizes zwischen den Schichten des Schutzfolienlaminats (a) und den Klebstoffschichten einschließlich der Klebstoffschicht (b) maximal 0,2 beträgt.

**13.** Elektrolumineszierender Folienverbund nach einem oder mehreren der Ansprüche 1 bis 12, **dadurch gekennzeichnet, dass** die Schichten (ca), (cb) und (cc) in Bezug auf das Schutzfolienlaminat (a) nur teilflächig ausgeführt sind.

**14.** Elektrolumineszierender Folienverbund nach einem oder mehreren der Ansprüche 1 bis 13, **dadurch gekennzeichnet, dass** die Schichten des Schutzfolienlaminats (a) eine Dicke im Bereich von 0,01 bis 0,3 mm, bevorzugt im Bereich von 0,012 bis 0,2 mm, besonders bevorzugt im Bereich von 0,02 bis 0,1 mm aufweisen.

**15.** Verfahren zur Herstellung eines elektrolumineszierenden Folienverbunds das nach einem oder mehreren der Ansprüche 1 bis 14 durch Heiß - oder Kaltlaminieren, Aufsetzen des Schutzfolienlaminats (a) einschließlich Klebeschicht (b) auf das EL-Element (c) oder umgekehrt mit Hilfe von Pick & Place-Automaten oder Kaschieren.

**16.** Verwendung eines elektrolumineszierenden Folienverbunds das nach einem oder mehreren der Ansprüche 1 bis 14 als Beleuchtung auf einem Kraftfahrzeug, als Beleuchtung an Hauswänden, Werbesäulen, Plakatwänden, Schaufenstern, Wandungen von Haltestellen des öffentlichen Nahverkehrs, insbesondere zu Werbezwecken, als Dekorationsbeleuchtung, als Sicherheitsbeleuchtung im Straßenverkehr, in der Luft- und Raumfahrt und beim Militär.
